Europäisches Patentamt

European Patent Office

Office européen des brevets

(19)

(11) Publication number: **0 237 143**

**A1**

(12) **EUROPEAN PATENT APPLICATION**

(21) Application number: **87300250.5**

(51) Int. Cl.⁴: **F16B 41/00**

(22) Date of filing: **13.01.87**

(30) Priority: **16.01.86 GB 8600959**

(43) Date of publication of application:
**16.09.87 Bulletin 87/38**

(84) Designated Contracting States:
**DE ES FR GB IT SE**

(71) Applicant: **Deacon, Bryan**
**26 Audley Road**
**Chippenham Wiltshire(GB)**

(72) Inventor: **Deacon, Bryan**
**26 Audley Road**
**Chippenham Wiltshire(GB)**

(74) Representative: **Bardo, Julian Eason et al**
**Abel & Imray Northumberland House 303-306**
**High Holborn**
**London, WC1V 7LH(GB)**

(54) **Fastener assembly.**

(57) A fastener assembly suitable for engaging a screw thread on a component (20, 2I) to be fastened to it comprises an inner member (I) having a screw threaded portion (5) for engaging the screw thread - (20) on the component to be fastened to it, an outer member (I0) surrounding the inner member and rotatably mounted thereon, the outer member having one or more formations to enable it to be rotated by a fastening tool, and a shear member(I3)engaging the inner member and the outer member to prevent relative rotation of the inner and outer members but being shearable in response to a predetermined torque being applied. The inner and outer members (I, I0) have interengaging formations which limit relative axial movement of the members after shearing of the shear member (I3).

FIG. 5.

EP 0 237 143 A1

## Fastener Assembly

This invention relates to a fastener assembly suitable for engaging a screw thread, for example on a bolt.

There are certain situations in which it is desirable to have a fastener which once secured cannot be released at least without a great deal of effort. Such a fastener is for example useful in assembling a security fence. A conventional nut and bolt fastener is of course about as simple to release as to secure and is therefore not appropriate in such situations. A conventional rivet fastener is more appropriate but small rivets are relatively weak and there is a limit to the size in which a rivet can conveniently be applied.

Various proposals for the design of fasteners that cannot readily be released have been made. In one such proposal a nut and bolt type fastener is employed but a special form of nut is provided. The nut has a leading frusto-conical part with an axial screw threaded bore engaging the bolt thread and a trailing part which is like a conventional nut. The two parts are integral, being joined by a thin circumferential strip of material at their interface. In use, the nut is screwed onto the bolt and fastened. When the fastening torque applied becomes great enough the thin circumferential strip of material connecting the two parts of the nut shears. The trailing part can then be removed leaving the frusto-conical part which has a smooth exterior surface and is therefore somewhat difficult to remove.

Such a fastener, while representing an improvement over a conventional nut and bolt fastener, does have certain drawbacks. The frusto-conical part, although smooth, is nonetheless exposed and it is therefore possible with a suitable tool either to apply a steady unfastening torque to it or to subject it to one or more impacts in a direction offset from the longitudinal axis of the bolt in an attempt to release it. The level of fastening torque at which the two parts of the nut shear does of course depend on the thickness of the thin circumferential strip of material and it is difficult to control this thickness while keeping the cost of manufacture at an acceptable level. A further disadvantage of the fastener is that it is not possible to alter the fastening torque at which shearing takes place without altering the main fabric of the fastener; this is disadvantageous as the desired fastening torque varies according to the application of the fastener.

It is an object of the invention to provide an improved form of fastener assembly of a kind that is relatively difficult to release.

According to the invention there is provided a fastener assembly suitable for engaging a screw thread on a component to be fastened to it, the assembly comprising an inner member having a screw threaded portion for engaging the screw thread on the component to be fastened to it, an outer member surrounding the inner member and rotatably mounted thereon, the outer member having one or more formations to enable it to be rotated by a fastening tool, and a shear member engaging the inner member and the outer member to prevent relative rotation of the inner and outer members but being shearable in response to a predetermined torque being applied to rotate the outer member relative to the inner member, the inner and outer members having interengaging formations which limit relative axial movement of the members after shearing of the shear member.

Once the shear member of the fastener assembly has sheared, rotation of the outer member is no longer effective to rotate the inner member. Furthermore the outer member is retained in position surrounding the inner member and thus obstructs access thereto. The torque at which the shear member shears is dependent upon the size of the shear member and the material from which it is made. Both these parameters can easily be controlled and varied.

While the outer member may have various formations to enable it to be rotated by a fastening tool, conveniently it has the external form of a bolt head or nut.

The inner member may have a portion of circular cross-section and the outer member may have an internal bore of circular cross-section by which the outer member is rotatably mounted on the circular portion of the inner member.

The shear member is preferably elongate, extending transverse to the axis of the screw threaded portion of the inner member and more preferably substantially radially outwardly from the axis of the threaded portion of the inner member. In such an arrangement, there is a simple and direct relationship between the torque transmitted between the inner and outer members and the shear force applied to the shear member. With such an arrangement it is particularly simple to calculate the torque at which a given shear member will shear.

Preferably the shear member engages in bores in the inner and outer members and more preferably is a pin which engages in aligned bores in the inner and outer members. Preferably the shear member is a tight fit in the bores. Again such arrangements facilitate calculation of the torque at which a given shear member will shear and making the shear member a tight fit also has the advantage that it is retained in the members after shearing.

Conveniently, the outer member has an inwardly projecting flange which engages in a circumferential recess in the exterior of the inner member to limit relative axial movement of the members.

The inner member may be formed from a main body portion, one end of which is of reduced external diameter, and an annular plate may be fixed to said one end and may have an external diameter greater than the reduced external diameter of said one end whereby the recess is formed.

The fastener assembly will normally be a nut assembly with the screw threaded portion of the inner member comprising a screw threaded bore in the member. An alternative arrangement, however, is for the assembly to be a bolt assembly with the screw threaded portion of the inner member comprising an externally screw threaded shank.

The inner member may include an end cover fixed at that end of the inner member, which is opposite to the end at which the annular plate is fixed if such a plate is provided, the end cover having a bore aligned with the screw threaded bore of the inner member. Such an end cover impedes access to the otherwise exposed end of the assembly.

Preferably the bore in the end cover is slightly smaller than the screw threaded bore in the inner member. With such an arrangement the end cover can assist in retaining the assembly securely fastened in the event that it is vibrated.

The end cover may be made of plastics material.

The fastening assembly may include a component having a screw thread engaging the screw threaded portion of the inner member; for example the assembly may consist of a nut assembly and a bolt or a bolt assembly and a nut. In such a case, the inner and outer members are preferably screwed onto the bolt with the flange of the outer member at that end of the outer member which is screwed further onto the screw threaded component.

By way of example certain fastener assemblies embodying the invention will now be described with reference to the accompanying drawings, of which:

Fig. I is a plan view of an inner member of a first form of fastener assembly,

Fig. 2 is a sectional view along the lines II -II in Fig. I,

Fig. 3 is a plan view of an outer member of the fastener assembly of Fig. I,

Fig. 4 is a sectional view along the lines III - III in Fig. 3,

Fig. 5 is a sectional view of the fastener assembly of Fig. I during fastening thereof,

Fig. 6 is a sectional view similar to Fig. 5 but showing the fastener assembly after completion of fastening,

Fig. 7 is a sectional view of a second form of fastener assembly before fastening, and

Fig. 8 is a sectional view similar to Fig. 7 showing the fastener assembly after fastening.

Referring first to Figs. I and 2, the inner member I shown in those figures comprises a main body 2 of generally circular cylindrical shape, an annular plate 3 press fitted at one end of the body 2 and an end cover 4 fixed over the end face at the other end of the body 2. The body 2 has a screw threaded bore 5, the thread of which is in this example a conventional single start thread and also a radially directed plain blind bore 6. The end of the body 2 to which the plate 3 is fixed is stepped inwardly twice to define shoulders 7 and 8. The plate 3 abuts the shoulder 8 and a recess 9 is defined between the shoulder 7 and the plate 3. The end cover 4 has a bore I5 aligned with the bore 5 in the main body 2. The bore I5 is slightly smaller than the bore 5 although this is not discernible in the drawings.

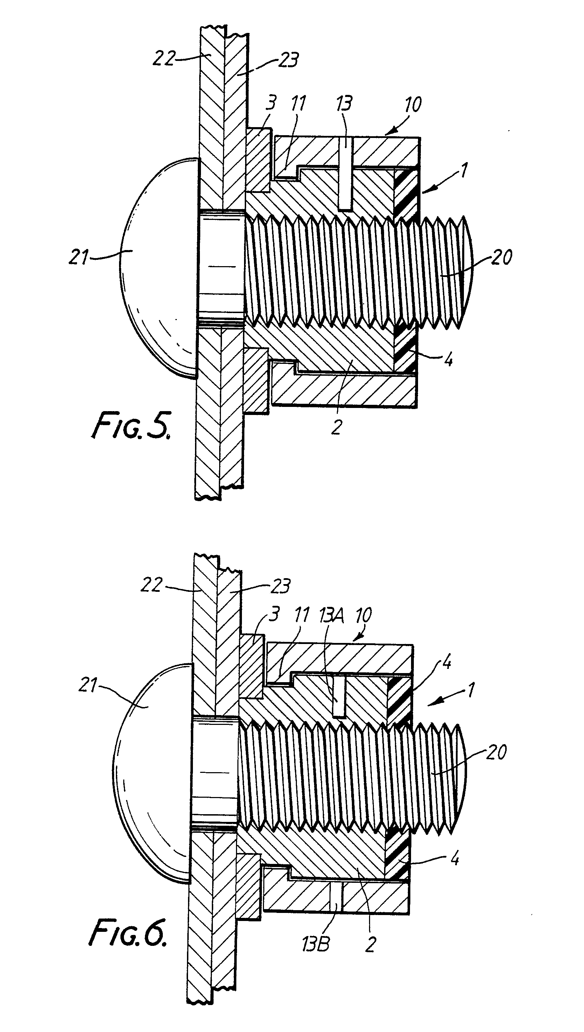

Referring now to Figs. 3 and 4, the outer member is of generally cylindrical shape having an outer hexagonal cross-section and an inner circular cross-section which is very slightly larger than the cross-section of the main body 2 of the inner member I. At one end the outer member I0 is provided with an inwardly directed flange II. The outer member I0 also has a radially directed plain bore I2.

Although the inner and outer members are shown separately in Figs. I to 4, they are in fact assembled together in the course of their production. More particularly, before the annular plate 3 is fixed to the body 2 of the inner member I, the inner member I is inserted into the outer member I0 until the flange II on the outer member abuts against the shoulder 7 on the inner member. The plate 3 is then fixed in position so that the flange II is located in the recess 9 and relative axial movement of the inner and outer members is prevented. The radially directed bores 6 and I2 are the same diameter and are positioned in the inner and outer members so that by appropriate relative rotation of the members they can be brought into alignment. Once they are so aligned a shear pin I3 (not shown in Figs. I to 4 but shown in Figs. 5 and 6) is press-fitted into the bores 6 and I2 from the outside. At any convenient stage during the assembly, the end cover 4 is fixed in position. The fastener assembly is then ready for use.

The main body 2 of the inner member, the annular plate 3, the shear pin 13 and the outer member 10 are in this example made of steel and the end cover 4 is made of resilient plastics material, but it will be appreciated that other materials could be used. The end cover 4 may be fixed to the body 2 by adhesive or may be directly moulded onto the body 2.

Figs. 5 and 6 show how the fastener assembly is used. Referring first to Fig. 5, the assembly is shown with the inner member 1 screwed onto the screw threaded shank 20 of a bolt having a head 21. In this particular example the assembly is being used to secure together two members 22, 23 but it will be appreciated that this is just one example of how the fastener could be used.

The assembly is screwed onto the bolt in just the same way as a conventional nut. Thus the outer member 10 is gripped by a user for example with the aid of a spanner, is held with the plate 3 of the inner member surrouning the distal end of the bolt and is rotated to screw the assembly onto the bolt. Torque applied to the outer member 10 is transmitted to the inner member 1 through the shear pin 13. Fig. 5 shows the assembly shortly before the final fastening torque has been reached.

As the assembly is screwed beyond the position shown in Fig. 5 so the fastening becomes tighter and the torque that has to be applied to the outer member 10 in order to rotate the inner member 1 increases. At some stage, determined by the transverse shear strength of the pin 13, the pin shears whereupon the outer member 10 becomes freely rotatable on the inner member 1. This situation is shown in Fig. 6 in which the parts of the pin 13 in the inner and outer members are referenced 13A and 13B respectively. At this stage the fastening operation is complete. The outer member 10 surrounds the inner member and cannot be removed because of the engagement of the flange 11 of the outer member in the recess 9 of the inner member 1. The end cover 4 impedes access to the end of the inner member 1 and also assists to retain the assembly fully fastened even if it is subjected to vibration.

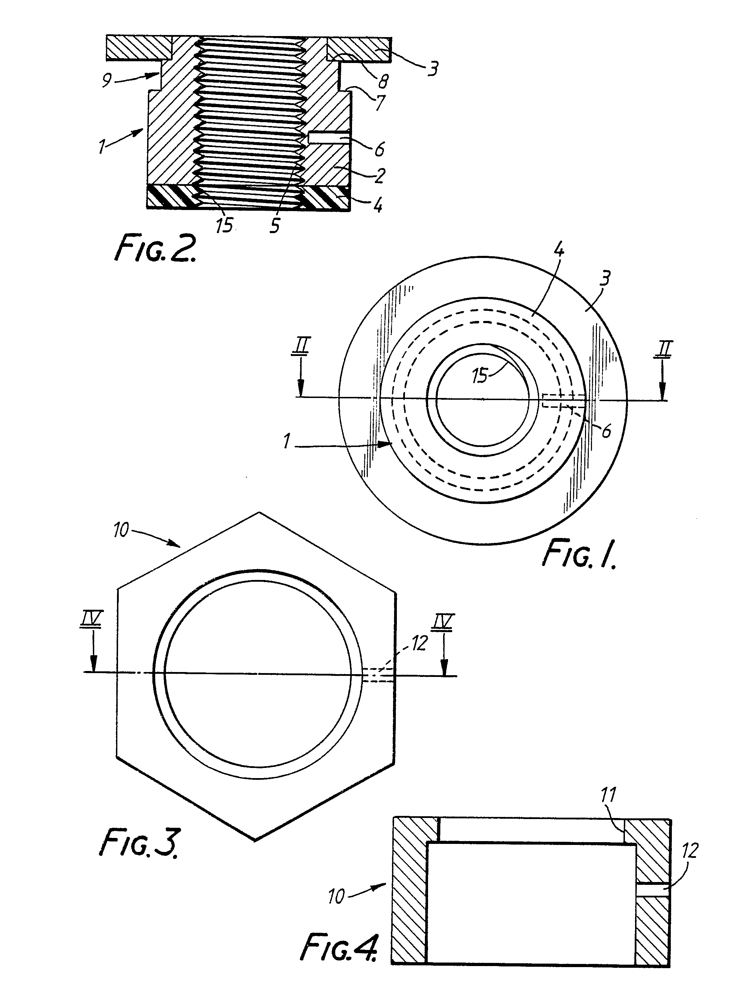

In the embodiment illustrated in Figs. 1 to 6 the annular plate 3 is fixed to the body 2 of the inner member. If desired the plate 3 may, however, be rotatably mounted on the body 2, and/or may be of smaller diameter than that shown in the drawings and partially or totally concealed by the outer member 10. Such measures would prevent an attempt being made to release the fastening by rotating the plate 3.

The torque at which the pin 13 shears can be altered simply by altering the material of which the pin 13 is made or by altering the diameter of the pin 13 and of the bores 6 and 12. Thus the assembly can readily be adapted to be fastened to different final fastening torques. Furthermore since the torque at which the pin 13 shears is determined by the size and material of the pin 13 it can be controlled quite closely without difficulty.

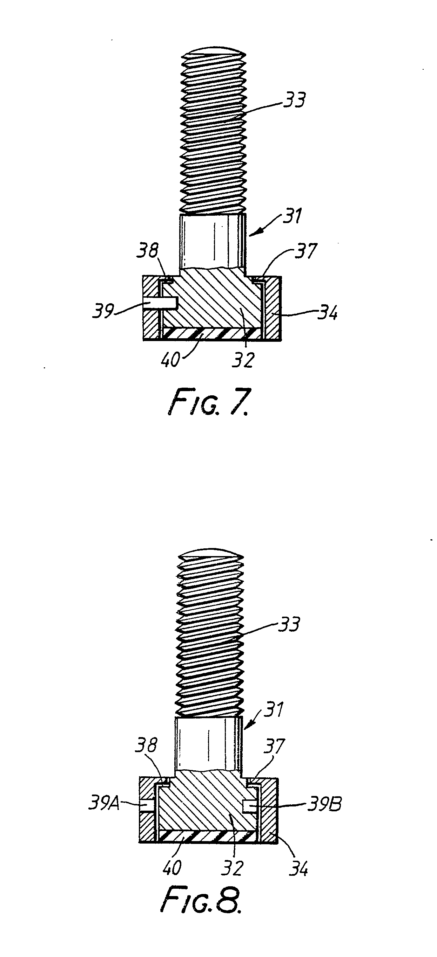

In the embodiment described above, a conventional bolt is employed with a special form of nut assembly. An alternative arrangement, which is illustrated in Figs. 7 and 8 is to employ a conventional nut (not shown) with a special form of bolt assembly.

Referring first to Fig. 7, which shows the bolt assembly prior to fastening, the assembly comprises an inner member 31, having a head 32 and an externally screw threaded shank 33, an outer member 34 and a shear pin 39. The head 32 is of generally circular cylindrical shape and the outer member 34 has an internal longitudinal bore of circular cross-section. At one end of the bore an inwardly projecting flange 37 is provided and the head 32 of the inner member 31 is stepped inwardly at its inner end to define a recess 38 which accommodates the flange 37. The outer member 34 has a radially directed bore and the head 32 has a similar radially directed blind bore; the shear pin 39 is received in the radially directed bores and prevents relative rotation of the inner and outer members. An end cover 40 of plastics material may be fixed to the outer end of the head 32.

The outer member 34 has a hexagonal exterior cross-section which can be engaged by a spanner or similar tool to rotate the bolt assembly relative to a nut (not shown) engaged on the shank 33. As in the case of the first embodiment, once a predetermined fastening torque has been reached, the shear pin 39 is sheared. The outer member 34 is then freely rotatable relative to the head 32, the flange 37 being narrower than the recess 38, and the outer member is axially retained by the flange 37. Fig. 8 shows this condition of the bolt assembly with the two parts of the shear pin referenced 39A and 39B respectively.

It will be appreciated that other features described with reference to the embodiment of Figs. 1 to 6 may be incorporated in the embodiment of Figs. 7 and 8.

## Claims

1. A fastener assembly suitable for engaging a screw thread on a component to be fastened to it, the assembly comprising an inner member having a screw threaded portion for engaging the screw thread on the component to be fastened to it, an outer member surrounding the inner member and rotatably mounted thereon, the outer member having one or more formations to enable it to be rotated by a fastening tool, and a shear member engaging the inner member and the outer member to prevent relative rotation of the inner and outer members but being shearable in response to a predetermined torque being applied to rotate the outer member relative to the inner member, the inner and outer members having interengaging formations which limit relative axial movement of the members after shearing of the shear member.

2. An assembly as claimed in claim I in which the inner member has a portion of circular cross-section and the outer member has an internal bore of circular cross-section by which the outer member is rotatably mounted on the circular portion of the inner member.

3. An assembly as claimed in claim I or 2 in which the shear member is elongate and extends transverse to the axis of the screw threaded portion of the inner member.

4. An assembly as claimed in any preceding claim in which the outer member has an inwardly projecting flange which engages in a circumferential recess in the exterior of the inner member to limit relative axial movement of the members.

5. An assembly as claimed in any preceding claim in which the assembly is a nut assembly and the screw threaded portion of the inner member comprises a screw threaded bore in the member.

6. An assembly as claimed in any of claims I to 9 in which the assembly is a bolt assembly and the screw threaded portion of the inner member comprises an externally screw threaded shank.

7. An assembly as claimed in claim I0 in which the inner member includes an end cover fixed at an end thereof and the end cover has a bore aligned with the screw threaded bore of the inner member.

8. An assembly as claimed in claim 7 in which the end cover is made of plastics material.

9. An assembly as claimed in any preceding claim further including a component having a screw thread engaging the screw threaded portion of the inner member.

*FIG. 2.*

*FIG. I.*

*FIG. 3.*

*FIG. 4.*

Fig.5.

Fig.6.

33

31

38

39

40    32

34

37

**FIG. 7.**

33

31

38

39A    39B

40    32    34

37

**FIG. 8.**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | WO-A-8 402 753 (ROGERS) <br><br> * claims; figure * | 1,2,5, 9 | F 16 B 41/00 |
| A | US-A-3 805 863 (STARR) | | |
| A | GB-A-2 153 948 (ORSOGRIL) | | |

TECHNICAL FIELDS SEARCHED (Int. Cl.4)

F 16 B 41/00
F 16 B 23/00

The present search report has been drawn up for all claims

| Place of search | Date of completion of the search | Examiner |
|---|---|---|
| BERLIN | 28-04-1987 | SCHAEFFLER C.A.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82